# EUROPÄISCHE PATENTSCHRIFT

(11) **EP 0 723 092 B1**
(45) Veröffentlichungstag und Bekanntmachung des Hinweises auf die Patenterteilung: **30.12.1998**
(21) Anmeldenummer: 96100238.3
(22) Anmeldetag: 10.01.1996
(51) Int. Cl.: F16F 15/131, F16F 15/315

(54) **Schwungrad-Kupplungsanordnung für manuell schaltbare, synchronisierte Wechselgetriebe, insbesondere für Kraftfahrzeuge**
Flywheel-clutch arrangement for manual, synchronised gearboxes, especially for motor vehicles
Arrangement de volant-embrayage pour des boîtes de vitesse manuelles synchronisées, spécialement pour véhicules motorisés

(30) Priorität: 20.01.1995 DE 19501590
(43) Veröffentlichungstag der Anmeldung: 24.07.1996
(73) Patentinhaber: Ford Global Technologies, Inc., Dearborn, Michigan 48126-2490 (US)
(72) Erfinder: Roeper, Hartmut, Dr., D-40789 Monheim (DE)
(74) Vertreter: Ritzkowsky, Harald, Dipl.-Ing.

(56) Entgegenhaltungen:
- FR-A- 2 441 768
- GB-A- 2 285 109
- US-A- 4 676 121
- PATENT ABSTRACTS OF JAPAN vol. 015, no. 336 (M-1151), 26.August 1991 & JP-A-03 129143 (NISSAN MOTOR CO LTD), 3.Juni 1991,
- PATENT ABSTRACTS OF JAPAN vol. 003, no. 154 (M-085), 18.Dezember 1979 & JP-A-54 132037 (AKEBONO BRAKE IND CO LTD), 13.Oktober 1979,
- PATENT ABSTRACTS OF JAPAN vol. 015, no. 257 (M-1130), 28.Juni 1991 & JP-A-03 084247 (NISSAN MOTOR CO LTD), 9.April 1991,

## Beschreibung

Die Erfindung bezieht sich auf eine Schwungrad-Kupplungsanordnung für manuell schaltbare, synchronisierte Wechselgetriebe, insbesondere für Kraftfahrzeuge, der im Oberbegriff des Patentanspruches 1 erläuterten Art.

Aus der US-PS 4 676 121 ist eine Schwungrad-Kupplungsanordnung für manuell schaltbare, synchronisierte Wechselgetriebe, insbesondere für Kraftfahrzeuge, bekannt, bei der ein Planetenradsatz angeordnet ist, dessen Planetenradträger von der Kurbelwelle angetrieben wird und dessen Planetenräder in Eingriff mit einem Ringrad und einem Sonnenrad stehen, wobei das Ringrad mit dem Schwungrad und der mit diesem zusammenwirkenden Kupplung und das Sonnenrad mit einer Getriebewelle des Wechselgetriebes treibend verbunden ist.

Das Schwungrad ist hierbei drehbar auf einer hohlen Eingangswelle des Wechselgetriebes angeordnet, mit der die Kupplungsreibscheibe drehfest verbunden ist und an der das Eingangsritzel des Wechselgetriebes ausgebildet ist. Die mit dem Sonnenrad verbundene Getriebewelle des Wechselgetriebes ist hierbei die konzentrisch innerhalb der Eingangswelle angeordnete Ausgangswelle, die je nach der jeweils eingerückten Gangstufe eine unterschiedliche Drehzahl aufweist, die über das Sonnenrad auf den Planetenradsatz einwirkt und die so die jeweilige Drehzahl des Schwungrades mit beeinflußt.

Diese Schwungrad-Kupplungsanordnung mit Planetenradsatz bezweckt das Massenträgheitsmoment der Schwungrad-Kupplungsanordnung im Leerlauf hochzusetzen und bei höherer Fahrgeschwindigkeiten entsprechend herabzusetzen.

Dadurch wird der Vorteil erzielt, daß im Leerlauf von der Verbrennungsmaschine herrührende Drehschwingungen durch ein hohes Trägheitsmoment der Schwungrad-Kupplungsanordnung ausgeglichen werden, wodurch störende Rattelgeräusche im Wechselgetriebe während des Leerlaufs vermieden werden können. Beim fortschreitenden Durchschalten durch die verschiedenen Gangstufen wird durch die rückwirkende Drehzahl des mit der Ausgangswelle verbundenen Sonnenrades das Massenträgheitsmoment der Schwungrad-Kupplungsanordnung stufenweise reduziert, so daß ein agileres Ansprechen der Verbrennungsmaschine bei Leistungsanforderung durch den Fahrer erzielt werden kann.

Die bekannte Schwungrad-Kupplungsanordnung zeigt zwar einen Weg zur Beeinflussung des Massenträgheitsverhalten einer solchen Anordnung auf, hat jedoch mit der der vorliegenden Erfindung zugrundeliegenden Aufgabenstellung nichts gemeinsam.

Die Aufgabe der vorliegenden Erfindung ist es, die Schaltbarkeit von manuell schaltbaren, synchronisierten Wechselgetrieben, insbesondere für Kraftfahrzeuge zu verbessern, ohne hierzu die an sich bekannten aufwendigen Maßnahmen, wie Doppel- oder Dreifach-Synchronisierung anwenden zu müssen. Diese Maßnahmen werden erforderlich, wenn infolge höherer Leistung der Verbrennungsmaschine die Schwungrad-Kupplungsanordnung der erhöhten Leistung entsprechend angepaßt werden muß und dadurch das Massenträgheitsmoment der Kupplungsreibscheibe entsprechend ansteigt. Durch das erhöhte Massenträgheitsmoment der Kupplungsreibscheibe ergibt sich eine höhere Synchronisierarbeit beim Schalten der verschiedenen Gangstufen, was sich in einer unerwünscht hohen Schaltbetätigungskraft am Schalthebel bemerkbar macht. Durch bekannte Maßnahmen, wie Doppel- oder Dreifach-Synchronisierungen kann man zwar diese Schaltbetätigungskraft wieder verringern, dies macht jedoch eine völlige Umkonstruktion des Wechselgetriebes im Bereich der Synchronisiervorrichtungen erforderlich.

Die Aufgabe der Erfindung ist es daher dafür zu sorgen, daß bei einer entsprechenden Leistungserhöhung, die eine entsprechende Anpassung, d.h. Vergrößerung der Schwungrad-Kupplungsanordnung erforderlich macht, die gute Schaltbarkeit des an sich auch für diesen Leistungsbereich ausreichend dimensionierten Wechselgetriebes aufrecht erhalten bleibt, ohne daß eine Umkonstruktion der Synchronisiereinrichtungen erfolgen muß.

Gemäß der Erfindung wird diese Aufgabe gelöst, indem bei einer Schwungrad-Kupplungsanordnung gemäß dem Oberbegriff des Patentanspruches 1 der Planetenradsatz derart angeordnet wird, daß das Schwungrad fest mit der Kurbelwelle, die Kupplungsreibescheibe mit dem Ringrad und das Sonnenrad mit der Eingangswelle des Wechselgetriebes fest verbunden ist.

Durch diese andere Verknüpfung des an einer Schwungrad-Kupplungsanordnung bekannten Planetenradsatzes wird erreicht, daß das Maschinendrehmoment über den Planetenradträger in den Planetenradsatz eingeleitet wird und die beiden freien Elemente des Planetenradsatzes, das mit der Kupplungsreibscheibe verbundene Ringrad und das mit der Eingangswelle verbundene Sonnenrad bei ausgerückter Kupplung frei floaten können, so daß während der Schaltung einer Gangstufe die aufzubringende Synchronisierarbeit zwar die Beschleunigung bzw. Verzögerung der Getriebezahnräder beinhaltet, die Beschleunigung und Verzögerung der Kupplungsreibscheibe jedoch nur zu einem Bruchteil mit übernommen werden muß.

Wenn man davon ausgeht, daß die bei einem Gangwechsel erforderliche Synchronisierarbeit zu etwa 70 % aus der zur Synchronisation der Kupplungsreibscheibe erforderlichen Arbeit besteht und für die Synchronisierung der Getriebezahnräder nur ein bescheidenerer Teil von 30 % erforderlich ist, so ist leicht zu erkennen, daß durch ein weitestgehendes Absplitten des Trägheitsmomentes der Kupplungsreibscheibe infolge der Splitwirkung des Planetenradsatzes, die bei einem Gangwechsel erforderliche Synchronisierungsarbeit soweit verringert werden kann, daß die im Wechselgetriebe standardmäßig vorgesehenen Einfach-Synchronisiervorrichtungen diese Arbeit ohne weiteres und mit den erwünschten niedrigen Schaltbetätigungskräften zu leisten im Stande sind.

Daraus folgend eröffnet sich die Möglichkeit, die Auslegung der Reibscheibenkupplung, die bisher in einem erzwungenen Kompromiß zwischen der wünschenswerten Kupplungsgröße und dem Geringhalten des Massenträgheitsmomentes einer solchen Kupplung gelegen hat, über Bord zu werfen und die Kupplung entsprechend den Erfordernissen der Leistungsanhebung auszubilden, ohne hierdurch eine Beeinträchtigung der Schaltbarkeit des Wechselgetriebes befürchten zu müssen.

Man kann daher, z.B. aus Gründen der Lebensdauer, größere Kupplungsreibscheiben anwenden, ohne daß, wie bisher, eine Verschlechterung der Schaltbarkeit - und zwar auch bei heute schon exisiterenden Getrieben mit Doppel- oder Dreifachsynchronisation - zu befürchten ist.

Darüber hinaus ist zu erwarten, daß der bei ausgerückter Kupplung mit seinen beiden freien Elementen floatende Planetenradsatz zu einer Verringerung des unerwünschten Leerlauf-Getrieberasselns führt, nachdem die störenden Drehschwingungen erst über einen entsprechenden dämpfenden Umweg auf die Getriebewellen einwirken können.

Die Erfindung wird anhand zweier in den Figuren gezeigten schematischen Ausführungsbeispiele näher erläutert. Es zeigt:
- Fig. 1A: eine schematische Darstellung einer ersten Ausführungsform der Schwungrad-Kupplungsanordnung in Verbindung mit dem Planetenradsatz und dem manuell schaltbar, synchronisierten Wechselgetriebe;
- Fig. 1B: eine schematische Darstellung einer zweiten Ausführungsform der erfindungsgemäßen Schwungrad-Kupplungsanordnung;
- Fig. 1C: eine schematische Darstellung einer weiteren Ausführungsform ähnlich Fig. lA;
- Fig. 2: einen Teilschnitt durch einen ersten konstruktiven Realisierungsvorschlag und
- Fig. 3: einen Teilschnitt durch einen zweiten konstruktiven Realisierungsvorschlag.

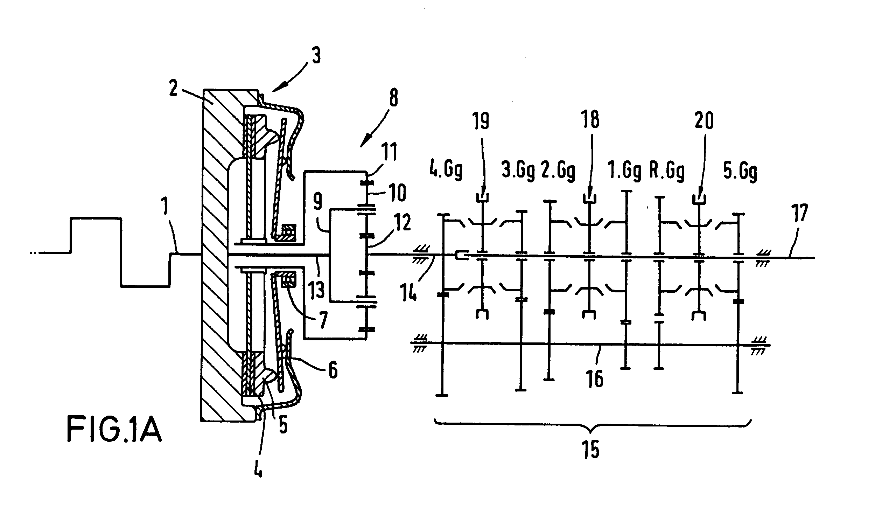

In der Fig. 1A ist die Kurbelwelle einer Verbrennungskraftmaschine mit 1 bezeichnet. Die Kurbelwelle 1 ist wie üblich fest mit einem Schwungrad 2 verbunden, an dem eine Reibscheibenkupplung 3 in bekannter Weise angeordnet ist, die im wesentlichen aus einer Kupplungsreibscheibe 4 besteht, die zwischen dem Schwungrad 2 und einer Anpreßplatte 5 über eine Kupplungsfeder 6 belastet und über eine Ein- und Ausrückeinrichtung 7 zum Ein- und Ausrücken betätigbar ist.

Ein im Bereich der Schwungrad-Kupplungsanordnung 2/3 angeordneter Planetenradsatz 8 besteht aus einem Planetenradträger 9 mit Planetenrädern 10, die mit einem Ringrad 11 und einem Sonnenrad 12 in treibendem Eingriff stehen.

Der Planetenradträger 9 ist hierbei über eine Welle 13 treibend mit dem Schwungrad 2 verbunden und das Sonnenrad 12 ist treibend mit der Eingangswelle 14 des als ganzes mit 15 bezeichneten Wechselgetriebe verbunden. Das Wechselgetriebe 15 ist schematisch in der Bauweise eines Vorgelegegetriebes gezeichnet, bei dem parallel zur Eingangswelle 14 ein sogenannter Vorgelege-Stufenblock 16 mit darauf fest angeordneten Zahnrädern und koaxial zur Eingangswelle 14 eine Ausgangswelle 17 vorgesehen sind.

Auf der Ausgangswelle 17 sind Synchronisiervorrichtungen 18, 19 und 20 zum Schalten von fünf Vorwärtsgängen und einem Rückwärtsgang angeordnet.

Es wird darauf hingewiesen, daß die Bauform des Wechselgetriebes an sich nicht Gegenstand der vorliegenden Erfindung ist und dementsprechend auch unterschiedliche Bauweisen, wie z.B. auch mit auf der Vorgelegewelle angeordneten Synchronisiervorrichtungen angewendet werden können.

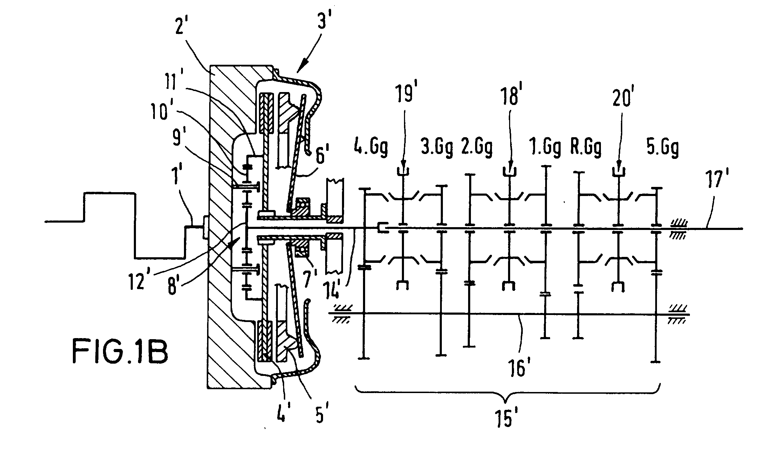

In Fig. 1B ist eine zweite Ausführungsform der Erfindung gezeigt, in der die im wesentlichen übereinstimmenden Bauteile mit den gleichen Bezugszeichen wie in Fig. 1A, jedoch mit einem Strich-Index versehen bezeichnet sind.

Der Unterschied der Ausführungsform nach Fig. 1B zur Ausführungsform nach Fig. 1A liegt nur in einer anderen Unterbringung des Planetenradsatzes 8' unmittelbar am Schwungrad 2'.

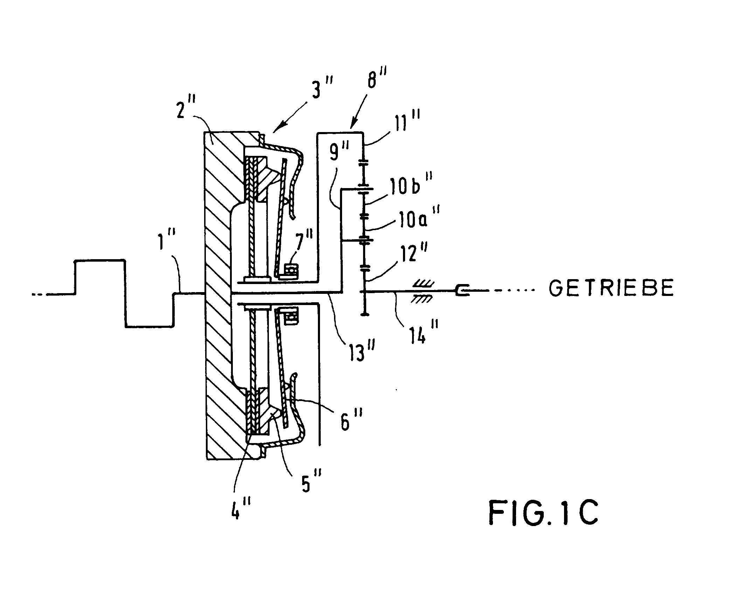

In Fig. 1C ist eine weitere Ausführungsform der Erfindung gezeigt, in der wieder die gleichen Bezugszeichen wie in Fig. 1A, jedoch mit einem Doppel-Strich-Index versehen verwendet werden.

Der Unterschied der Ausführungsform nach Fig. 1C zur Ausführungsform nach Fig. 1A liegt nur in der Anwendung eines Planetenradsatzes 8'', der an seinem Planetenradträger 9'' zwei miteinander in Eingriff stehende Sätze von Planetenrädern 10a'' und 10b'' aufweist.

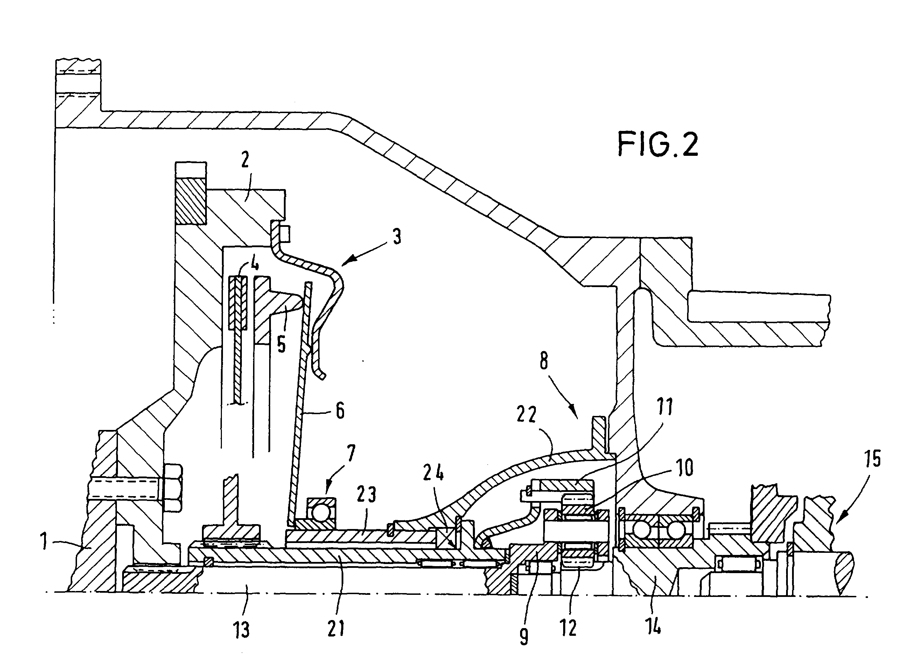

In der Fig. 2 ist ein erster konstruktiver Realisierungsvorschlag gezeigt, in dem die gleichen Bezugszeichen wie in Fig. 1A verwendet werden, da diese ja die gleichen Bauteile bezeichnen.

Mit der Kurbelwelle 1 einer Verbrennungskraftmaschine ist ein Schwungrad 2 in an sich bekannter, üblicher Weise drehfest verbunden. Mit dem Schwungrad 2 ist eine an sich herkömmliche Reibscheibenkupplung 3 verbunden, die im wesentlichen aus einer Kupplungsreibscheibe 4, einer Anpreßplatte 5, einer Kupplungsfeder 6 und einer Ausrückeinrichtung 7 besteht.

Ein im Bereich der Schwungrad-Kupplungsanordnung 2/3 angeordneter Planetenradsatz 8 besteht in üblicher Weise aus einem Planetenradträger 9 mit Planetenrädern 10, die mit einem Ringrad 11 und einem Sonnenrad 12 in treibendem Eingriff stehen.

Der Planetenradträger 9 ist hierbei über eine Welle 13 treibend mit dem Schwungrad 2 verbunden und das Sonnenrad 12 ist treibend bzw. einstückig mit der Eingangswelle 14 des als Ganzes mit 15 bezeichneten Wechselgetriebes verbunden.

Die Kupplungsreibscheibe 4 ist hierbei über eine die Welle 13 konzentrisch umfassende Hohlwelle 21 treibend mit dem Ringrad 11 des Planetenradsatzes 8 verbunden. Auf einem mit dem Getriebegehäuse verbundenen Gehäuse 22 für den Planetenradsatz 8 ist eine feststehende Hülse 23 angeordnet, auf der die Ein-und Ausrückeinrichtung 7 der Reibungskupplung 3 angeordnet ist.

Durch das sich an das Getriebegehäuse anschließende Gehäuse 22 des Planetenradsatzes 8 kann der Planetenradsatz 8 mit in den Schmiermittelkreislauf des Wechselgetriebes einbezogen werden, wobei durch eine entsprechende Dichtung 24 ein Austritt des Schmiermittels in den Bereich der Schwungradkupplungsanordnung vermieden werden muß.

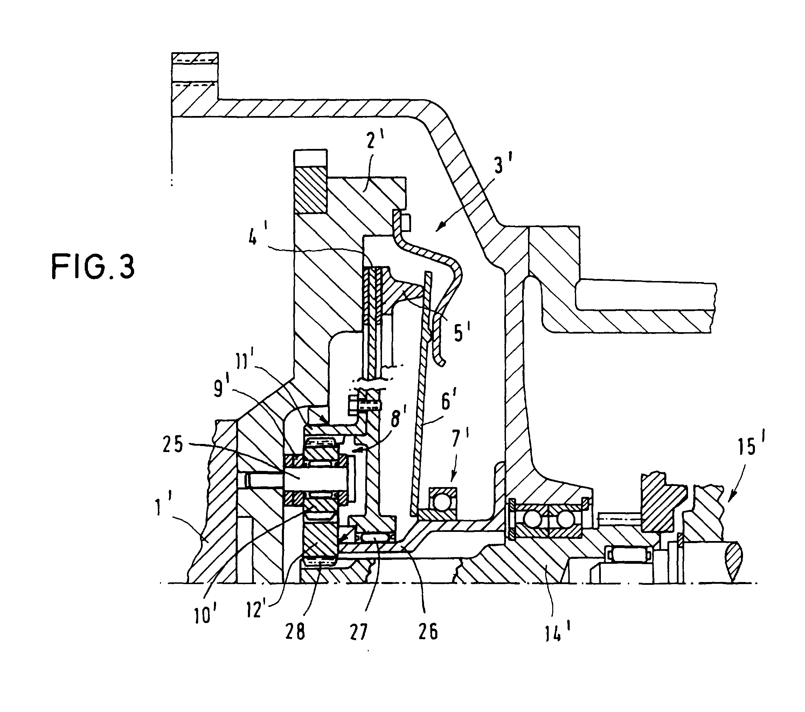

Aus Fig. 3 ist eine Anordnung außerhalb des Schmiermittelkreises des Wechselgetriebes ersichtlich, bei der der im Bereich der Schwungrad-Kupplungsanordnung angeordnete Planetenradsatz mit entsprechenden Vorkehrungen zur Schmierung des Planetenradsatzes auf Lebensdauer versehen sein muß.

Bei dieser Ausführungsform, die wesentlich kürzer baut und daher für Motor-Getriebe-Aggregate in Frage kommt, die quer im Kraftfahrzeug zum Antrieb der Vorderräder angeordnet werden, sind die gleichen Bezugszeichen wie in Fig. 1B verwendet, da es sich hier um die gleiche Bauweise handelt.

Der Unterschied der Ausführungsform nach Fig. 3 zur Ausführungsform nach Fig. 2 liegt in der Anordnung des Planetenradsatzes 8' im Bereich der Schwungrad-Kupplungsanordnung.

Der Planetenradträger 9' ist unmittelbar durch Preßsitzbolzen 25 mit dem Schwungrad 2' verbunden. An der Kupplungsreibscheibe 4' ist das Ringrad 11' über einen Zentrieransatz angebaut und die Nabe der Kupplungsreibscheibe 4' ist auf einer die Ausrückeinrichtung 7' tragenden, feststehenden Hülse 26 über z.B. ein abgedichtetes Nadellager 27 drehbar gelagert. Der äußere Bereich der Kupplungsscheibe 4' kann federnd die axiale Beweglichkeit für die Kupplungsscheibe zur Verfügung stellen.

Das Sonnenrad 12' ist z.B. über eine Splineverzahnung 28 mit der verlängerten Eingangswelle 14' des Getriebes 15' treibend verbunden.

Die angedeuteten Lagerungen und Abstützungen der verschiedenen Wellen im Bereich des Planetenradsatzes und im Bereich der Eingangswelle des Wechselgetriebes sind nur als eine ggf. mögliche Ausführungsform aufgezeigt, sie stellen noch keineswegs zweckmäßige konstruktive Lösungen dar.

### Funktionsweise:

Durch die erfindungsgemäße Schwungrad-Kupplungsanordnung mit angeordnetem Planetenradsatz und dessen besonderer Verknüpfung wird sichergestellt, daß bei eingerückter Reibungskupplung 3 der Planetenradsatz 8 verblockt wird und dementsprechend eine Drehmomentübertragung ohne Mitwirkung des Planetenradsatzes auf die Eingangswelle 12 des Wechselgetriebes 15 erfolgt.

Sobald jedoch die Reibungskupplung 3 durch Betätigen der Ein-und Ausrückvorrichtung 7 ausgekuppelt wird, erfolgt eine kinematische Kopplung des Motordrehmomentes von der Kurbelwelle 1 über das Schwungrad 2 über die Welle 13 auf den Planetenradträger 9 und von dessen Planetenräder 10 auf das Ringrad 11 mit der Kupplungsreibscheibe 4 und auf das Sonnenrad 12 mit der Eingangswelle 14, dem Vorgelege-Stufenblock 16 und der Ausgangswelle 17. Dabei ergibt sich, daß das Ringrad 11 und das Sonnenrad 12 praktisch frei floatende Elemente des Planetenradsatzes 8 bilden, wodurch das während eines Gang; wechsels zu beschleunigende oder abzubremsende Massenträgheitsmoment in das der Kupplungsreibscheibe 15 und der Getriebezahnräder aufgesplittet wird, wobei noch der Vorteil auftritt, daß das an sich mit einem größeren Anteil wirkende Massenträgheitsmoment der Kupplungsreibscheibe 4 durch die im Planetenradsatz 8 vorliegende Übersetzung und die freigegebenen Reaktionsmöglichkeiten nur mehr zu einem Bruchteil seines Betrages, nämlich nur mehr zu etwa 1/9 bei der zu lei-stenden Synchronisierarbeit wirksam wird. Der Wert, mit dem das Massenträgheitsmoment der Kupplungsreibscheibe bei der Synchronisierarbeit zu berücksichtigen ist, ergibt sich aus der gewählten Übersetzung des Planetenradsatzes.

Selbstverständlich bedeutet die Anordnung des zusätzlichen Planetenradsatzes im Bereich der Schwungrad-Kupplungsanordnung einen zusätzlichen Bauaufwand, der Kosten verursacht, wenn man jedoch dabei berücksichtigt, daß mit einer solchen Anordnung die Kombination einer Verbrennungskraftmaschine mit höherer Leistung mit einem bereits gegebenen Wechselgetriebe ermöglicht, ohne daß hierdurch dessen Schaltbarkeit unzumutbar wird, so kann dieser zusätzliche Bauaufwand durchaus wesentlich unter dem liegen, der für eine Umkonstruktion und Anpassung des Wechselgetriebes mit einer Doppel- oder Dreifach-Synchronisation erforderlich würde.

## Patentansprüche

1. Schwungrad-Kupplungsanordnung für manuell schaltbare, synchronisierte Wechselgetriebe, insbesondere für Kraftfahrzeuge, mit einem Planetenradsatz (8), dessen Planetenradträger (9) von der Kurbelwelle (1) angetrieben wird und dessen Planetenräder (10) in Eingriff mit einem Ringrad (11) und einem Sonnenrad (12) stehen, wobei das Ringrad (11) mit dem Schwungrad (2) und mit der mit diesem zusammenwirkenden Kupplung (3) und das Sonnenrad (12) mit einer Getriebewelle des Wechselgetriebes (15) treibend verbunden ist,
**dadurch gekennzeichnet,** daß
- das Schwungrad (2) mit der Kurbelwelle (1),
- die Kupplungsreibscheibe (4) mit dem Ringrad (11) und
- das Sonnenrad (12) mit der Eingangswelle (14) des Wechselgetriebes (15) fest verbunden ist.

2. Schwungrad- Kupplungsanordnung nach Anspruch 1,
**dadurch gekennzeichnet,** daß
- der Planetenradsatz (8) in einem an das Gehäuse des Wechselgetriebes (15) anschließenden Gehäuse (22) untergebracht und an den Schmiermittelkreis des Wechselgetriebes (15) angeschlossen ist.

3. Schwungrad- Kupplungsanordnung nach Anspruch 1,
**dadurch gekennzeichnet,** daß
- der Planetenradsatz (8') am Schwungrad (2') angeordnet und in einem auf Lebensdauer geschmierten abgeschlossenen Raum angeordnet ist.

## Claims

1. Flywheel-clutch arrangement for manually shiftable, synchronised change-speed gearboxes, in particular for motor vehicles, having a planetary gear assembly (8) of which the planet carrier (9) is driven by the crankshaft (1) and of which the planet wheels (10) are in engagement with a ring gear (11) and a sun wheel (12), the ring gear (11) being drivingly connected to the flywheel (2) and to the clutch (3) which cooperates therewith and the sun wheel being drivingly connected to a gear shaft of the change-speed gearbox (15),
characterised in that
- the flywheel (2) is firmly connected to the crankshaft (1),
- the friction plate (4) of the clutch is firmly connected to the ring gear (11) and
- the sun wheel (12) is firmly connected to the input shaft (14) of the change-speed gearbox (15).

2. Flywheel-clutch arrangement according to claim 1,
characterised in that
- the planet gear assembly (8) is accommodated in a housing (22) adjacent to the housing of the change-speed gearbox (22) and is connected to the lubricant circuit of the change-speed gearbox (15).

3. Flywheel-clutch arrangement according to claim 1,
characterised in that
- the planet gear assembly (8') is fitted on the crankshaft (2') and is located in a lifetime lubricated closed chamber.

## Revendications

1. Ensemble volant moteur-embrayage pour boîtes de vitesses à engrenages, à commande manuelle et synchronisées, en particulier pour véhicules automobiles, comprenant un train planétaire (8) dont le porte-satellites (9) est entraîné par le vilebrequin (1) et dont les pignons satellites (10) sont en prise avec une couronne dentée (11) et une roue solaire (12), la couronne (11) étant reliée pour l'entraînement au volant (2) et à l'embrayage (3) coopérant avec celui-ci, et la roue solaire (12) étant reliée pour l'entraînement à un arbre d'engrenages de la boîte de vitesses (15), caractérisé en ce que
- le volant (2) est relié fixe au vilebrequin (1),
- le disque d'embrayage à friction (4) est relié fixe à la couronne (11) et
- la roue solaire (12) est reliée fixe à l'arbre d'entrée (14) de la boîte de vitesses (15).

2. Ensemble volant moteur-embrayage selon la revendication 1, caractérisé en ce que le train planétaire (8) est logé dans un carter (22) faisant suite au carter de la boîte de vitesses (15) et est raccordé au circuit de graissage de la boîte de vitesses (15).

3. Ensemble volant moteur-embrayage selon la revendication 1, caractérisé en ce que le train planétaire (8') est installé sur le volant (2') et logé dans un espace fermé graissé à vie.
